(19) Europäisches Patentamt
European Patent Office
Office européen des brevets

(11) **EP 2 053 558 A2**

(12) **EUROPEAN PATENT APPLICATION**

(43) Date of publication:
**29.04.2009 Bulletin 2009/18**

(51) Int Cl.:
***G06T 5/40*** *(2006.01)*

(21) Application number: **08006407.4**

(22) Date of filing: **31.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.10.2007 US 925189**

(71) Applicant: **Qualcomm Incorporated**
**San Diego, CA 92121-1714 (US)**

(72) Inventors:
• **Atanassov, Kalin**
**c/o QUALCOMM Incorporated**
**San Diego, CA 92121-1714 (US)**

• **Jiang, Xiaoyun**
**c/o QUALCOMM Incorporated**
**San Diego, CA 92121-1714 (US)**
• **Zhong, Xin**
**c/o QUALCOMM Incorporated**
**San Diego, CA 92121-1714 (US)**
• **Noyes, Xing Xie**
**c/o QUALCOMM Incorporated**
**San Diego, CA 92121-1714 (US)**

(74) Representative: **Heselberger, Johannes**
**Patent- und Rechtsanwälte**
**Bardehle - Pagenberg - Dost**
**Altenburg - Geissler**
**Galileiplatz 1**
**81679 München (DE)**

(54) **Image quality enhancement with histogram diffusion**

(57) Techniques for improving the quality of images are described. A first histogram of intensity values may be obtained for an input image and diffused to obtain a second histogram with better intensity coverage. The diffusion may be achieved by filtering the first histogram for multiple iterations with a diffusion function obtained based on a filter function and a diffusion control function. The filter function may control the rate and/or characteristics of the diffusion. The diffusion control function may control shifts in positions of lobes in the first histogram. A transformation function may be determined based on a first cumulative distribution function (CDF) for the first histogram and an inverse function for a second CDF for the second histogram. An output image may be generated by mapping each pixel value in the input image to a corresponding pixel value in the output image based on the transformation function.

FIG. 5

## Description

### FIELD

The present disclosure relates generally to data processing, and more specifically to techniques for enhancing the quality of captured images.

### BACKGROUND

Digital and regular photography are widely used to capture images of scenes. In many instances, the captured images may have poor quality due to imbalance lighting. For example, a scene may be illuminated uniformly but may not reflect back a uniformly illuminated image to a camera. The imbalance lighting may result in some regions of the image being very dark and other regions being very bright. In general, imbalance lighting may result in images having poor contrast, loss of details, and/or other traits of poor quality. It is desirable to improve the quality of such images.

### SUMMARY

Techniques for improving the quality of images are described herein. In an aspect, a first/oiiginal histogram of intensity values may be obtained for an input image and may be diffused to obtain a second/diffused histogram with better intensity coverage. The first histogram may correspond to a probability density function (PDF) of intensity values for all pixels in the input image.

In one design, diffusion may be achieved by filtering the first histogram for multiple iterations with a diffusion function, which may be obtained based on a filter function and a diffusion control function. The filter function may control the rate and/or characteristics of the diffusion. The diffusion control function may control shifts in positions of lobes in the first histogram. A transformation function may be determined based on the first and second histograms. For example, a first cumulative distribution function (CDF) may be obtained based on the first histogram, and a second CDF may be obtained based on the second histogram. The transformation function may then be determined based on the first CDF, an inverse function of the second CDF, and possibly other CDFs. An output image may be generated by mapping each pixel value in the input image to a corresponding pixel value in the output image based on the transformation function.

Various aspects and features of the disclosure are described in further detail below.

### BRIEF DESCRIPTION OF THE DRAWINGS

FIG. 1 shows a 2-dimensional image.

FIG. 2 shows a histogram of intensity values for the image in FIG. 1.

FIG. 3A shows use of histogram diffusion to stretch contrast.

FIG. 3B shows use of histogram diffusion to enhance details.

FIG. 4A shows a PDF of an input image.

FIG. 4B shows a CDF for the PDF in FIG. 4A.

FIG. 4C shows a diffusion control function.

FIG. 4D shows diffused PDFs after different numbers of iterations.

FIG. 4E shows a CDF for a diffused PDF and an inverse of the CDF.

FIG. 4F shows several transformation functions.

FIG. 5 shows a process for enhancing image quality.

FIG. 6 shows a block diagram of a wireless communication device.

### DETAILED DESCRIPTION

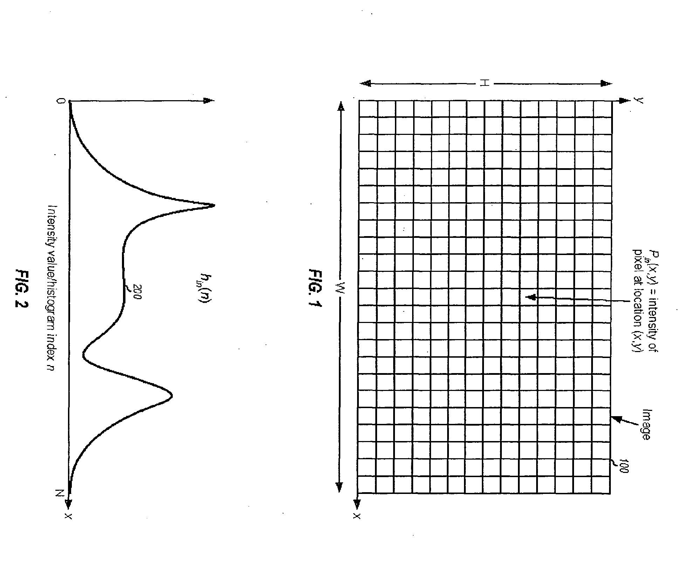

**FIG. 1** shows a 2-dimensional image 100, which may be captured using various means such as a regular camera, a digital camera, a video camera, etc. Image 100 includes W picture elements (pixels) in the horizontal (x) direction and H pixels in the vertical (y) direction, where W and H may each be any integer value. For example, the W x H dimension of image 100 may be 640x480 for VGA, 800x600 for SVGA, 1024x768 for XGA, etc.

Each pixel may be associated with luminance and chrominance information or color information. The luminance information conveys the intensity or grey scale of the pixel and is denoted as Y for luminance component. The chrominance information conveys color information and may be provided as $Cr$ for red chrominance component and $Cb$ for blue chrominance component. The color information may be provided by red (R), green (G), and blue (B) components. $Y, Cr$ and Cb may be converted to R, G and $B,$ and vice versa, via known matrix transformations.

The image quality enhancement techniques described herein may be applied to any component used to convey an image. For example, the techniques may be applied to only luminance component, to each of the luminance and chrominance components, to each of the color components, etc. For clarity, the techniques are described below for luminance component, which is also commonly referred to as intensity, grey scale, etc.

In image 100, the luminance or intensity of a pixel at coordinate $x$, $y$ may be denoted as $P_{in}(x,y)$ and may be represented with B bits, where B may be any integer value. $P_{in}(x,y)$ may then be within an intensity range of 0 through N, or $0 \leq P_{in}(x, y) \leq N$, where $N = 2^B-1$. An intensity range is a range of all possible values for intensity. For example, if B = 8, then $P_{in}(x,y)$ is within an intensity range of 0 through 255.

**FIG. 2** shows an example histogram 200 of intensity values for image 100. Histogram 200 may be determined for image 100 by (a) counting the number of pixels in image 100 with an intensity value of 0, the number of pixels with an intensity value of 1, etc., and the number of pixels with an intensity value of N and (b) dividing the pixel count for each intensity value by a normalization factor Q. In one design, the normalization factor is equal to N divided by the total number of pixels in image 100, or $Q = N /(W \cdot H)$, which may simplify computation on the histogram, as described below. A table with N+1 entries for intensity values of 0 through N may be used to determine the histogram, and the entries of the table may be set to zero initially. Then, for each pixel in image 100, the intensity value of that pixel may be determined, and the table entry for that intensity value may be incremented by one. After examining all of the pixels in image 100, each entry of the table may be divided by the normalization factor Q. Histogram 200 represents a PDF $h_{in}(n)$ that indicates the probability of occurrence of each intensity value n, where $n$ is also an index for the histogram.

A CDF $H_{in}(n)$ may be obtained based on the PDF $h_{in}(n)$ For each value of $n$, $H_{in}(n)$ is equal to the summation of $h_{in}(n)$ from 0 to $n$. $H_{in}(n)$ is indicative of the area under the curve of $H_{in}(n)$ from 0 to $n$ and is equal to N for the largest value of $n$, or $H_{in}(N) = N$, with the normalization factor Q described above.

In general, the pixels within an image may have any intensity values, which may be dependent on the captured scene, lighting conditions, etc. Imbalance lighting may cause the image to have poor quality, which may be quantified by various traits. As one example, the image may have some regions that are very dark and some regions that are very bright, which may result in loss of details. As another example, many pixels in the image may have intensity values that fall within a small portion of the intensity range, which may then cause the image to have less contrast. Poor image quality may also be given by other traits.

The quality of an image may be enhanced by utilizing more of the intensity range. For example, if the image does not significantly occupy a middle portion of the intensity range, then this portion may be used to show more details that would otherwise be buried in too dark or too bright regions. As another example, if the image occupies mostly the middle portion of the intensity range and has poor contrast, then the lower and higher portions of the intensity range may be used to improve contrast.

The techniques described herein may improve image quality by re-mapping the luminance component of an input image using a function that results in an output image having better coverage across the intensity range. In one design, which is referred to as histogram diffusion, an original histogram of intensity values is obtained for the input image and is diffused to generate a diffused histogram with better intensity coverage. The term "diffuse" refers to flatting, spreading, or stretching of a shape to make the shape more flat. The diffusion may retain the general shape of the original histogram while extending the breadth of intensity values used for the output image. In other designs, the original histogram may be modified or mapped to another histogram based on some mapping function that can retain the general shape of the original histogram while extending the intensity coverage. In any case, the output image may be generated based on the new/diffused histogram. For clarity, image quality enhancement using histogram diffusion is described below.

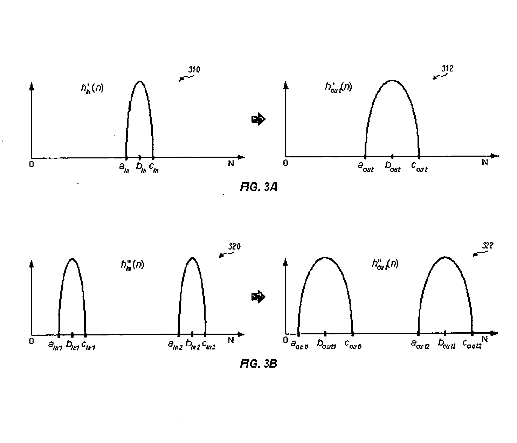

**FIG. 3A** shows use of histogram diffusion to stretch contrast. An input image has an original histogram 310 of pixel intensity values, which corresponds to a PDF of $h'_{in}(n)$ for the input image. In this example, histogram 310 has a single lobe that spans from intensity values of $a_{in}$ to $c_{in}$ and is centered at an intensity value of $b_{in}$. In general, a lobe may be any extrusion from surrounding values and may have any shape. The single lobe in histogram 310 may occupy a small portion of the entire intensity range from 0 to N.

A new histogram 312 corresponding to a PDF of $h'_{out}(n)$ may be obtained by diffusing original histogram 310. Histogram 312 also has a single lobe that spans from intensity values of $a_{out}$ to $c_{out}$ and is centered at an intensity value of $b_{out}$. The lobe in histogram 312 may be stretched so that $(c_{out} - a_{out}) > (c_{in} - a_{in})$, where $a_{out}$ may be less than $a_{in}$ and/or $c_{out}$ may be greater than $c_{in}$. The center of the lobe in histogram 312 may be maintained at the same position so that $b_{out} = b_{in}$ or may be shifted lower or higher relative to the center of the lobe in histogram 310. In any case, stretching the lobe in histogram 312 may improve contrast in an output image generated based on histogram 312.

**FIG. 3B** shows use of histogram diffusion to enhance details. An input image has an original histogram 320 of pixel intensity values, which corresponds to a PDF of $h''_{in}(n)$ for the input image. In this example, histogram 320 has two lobes. The lower lobe spans from intensity values of $a_{in1}$ to $c_{in1}$ and is centered at an intensity value of $b_{in1}$. The higher lobe spans from intensity values of $a_{in2}$ to $c_{in2}$ and is centered at an intensity value of $b_{in2}$. Each lobe occupies a small portion of the entire intensity range, and neither lobe occupies the center portion of the intensity range.

A new histogram 322 corresponding to a PDF of $h''_{out}(n)$ may be obtained by diffusing original histogram 320.

Histogram 322 also has two lobes. The lower lobe spans from intensity values of $a_{out1}$ to $c_{out1}$ and is centered at an intensity value of $b_{out1}$. The higher lobe spans from intensity values of $a_{out2}$ to $c_{out2}$ and is centered at an intensity value of $b_{out2}$. The lower lobe in histogram 322 may be stretched so that $(c_{out1} - a_{out1}) > (c_{in1} - a_{in1})$, where $a_{out1}$ may be less than $a_{in1}$ and/or $c_{out1}$ may be greater than $c_{in1}$. The center of the lower lobe in histogram 322 may be maintained at the same position so that $b_{out1} = b_{in1}$ or may be shifted lower or higher relative to the center of the lower lobe in histogram 320. The higher lobe in histogram 322 may also be stretched so that $(c_{out2} - a_{out2}) > (c_{in2} - a_{in2})$, where $a_{out2}$ may be less than $a_{in2}$ and/or $c_{out2}$ may be greater than $c_{in2}$. The center of the lower lobe in histogram 322 may be maintained at the same position so that $b_{out2} = b_{in2}$ or may be shifted lower or higher relative to the center of the higher lobe in histogram 320. In any case, stretching the two lobes in histogram 322 may improve details in an output image generated based on histogram 322.

FIGS. 3A and 3B show two examples of histogram diffusion to improve intensity coverage while retaining the general shape of the original histograms. In general, histogram diffusion may be performed on histograms with any shape. The amount of diffusion (or the amount of increase in intensity coverage) may be controlled as described below. The positions of lobes in a histogram may also be controlled as described below.

Histogram diffusion may be performed in various manners. In one design, histogram diffusion is achieved by filtering an original histogram in an iterative manner based on a filter function $f(\ell)$ and a diffusion control function $d(n)$. The filter function may determine the rate and/or other characteristics of diffusion and may be defined with $2L+1$ taps, where $L$ may be any integer value. The diffusion control function may be defined to achieve desired shifts in the positions of lobes, as described below. A diffusion function $g(n,\ell)$ may be defined based on the filter function $f(\ell)$ and the diffusion control function $d(n)$, as follows:

$$g(n + \ell) = f(\ell) \cdot d(n) , \qquad \text{for } \ell = -1, ..., -L ,$$

$$g(n) = f(0) \cdot d(n) , \qquad \text{for } \ell = 0 , \text{ and} \qquad\qquad \text{Eq (1)}$$

$$g(n + \ell) = f(\ell) / d(n) , \qquad \text{for } \ell = +1, ..., +L .$$

As shown in equation set (1), diffusion coefficients $g(n+\ell)$, for $n = 0, ..., N$ and $= 0, \pm 1, ..., \pm L$, are functions of intensity value/histogram index n as well as tap index $\ell$. In particular, $g(n+\ell)$ is dependent on filter coefficient $f(\ell)$ at tap index $\ell$ and diffusion control value $d(n)$ for intensity value $n$. The multiplication by $d(n)$ for negative $\ell$ and division by $d(n)$ for positive are used to control shifts in positions of lobes.

The diffusion of the original histogram may be iteratively performed as follows:

$$h_k(n) = \frac{\sum_{\ell=-L}^{L} h_{k-1}(n + \ell) \cdot g(n + \ell)}{\sum_{\ell=-L}^{L} g(n + \ell)} , \qquad\qquad \text{Eq (2)}$$

where $h_k(n)$ is a diffused PDF after $k$ iterations.

In general, the filter function $f(\ell)$ may have any response and include any number of taps. A lowpass filter response may be used to diffuse or flatten lobes in the original histogram. The filter response may be selected to achieve any desired amount of flattening, e.g., to flatten narrow lobes and retain wide lobes. An odd number of taps (e.g., 3, 5, etc.) may simplify computation. The filter function may also have a programmable delay, which may be used to control shifts in positions of lobes. In one example design, the filter function $f(\ell)$ is a 3-tap averaging function that may be given as follows:

$$f(0) = f(-1) = f(+1) = 1 . \qquad\qquad \text{Eq (3)}$$

For the 3-tap filter function shown in equation (3), the diffusion of the original histogram may be iteratively performed as follows:

$$h_k(n) = \frac{h_{k-1}(n-1) \cdot d(n) + h_{k-1}(n) + h_{k-1}(n+1)/d(n)}{1 + d(n) + 1/d(n)} \quad . \qquad \text{Eq (4)}$$

In equations (2) and (4), the PDF $h_0(n)$ used for the first iteration may be set equal to the PDF $h_{in}(n)$ of the input image, or $h_0(n) = h_{in}(n)$. For each iteration $k$, a new histogram value $h_k(n)$ may be computed for each integer value of $n$ based on the histogram values from the prior iteration $k$-1. For the smallest intensity value of $n = 0$, $h_{k-1}(n-1)$ may be set to either zero or $h_{k-1}(n)$. For the largest intensity value of $n = $ N, $h_{k-1}(n+1)$ may be set to either zero or $h_{k-1}(n)$. To reduce memory usage, the computation for each iteration may be performed "in-place". In one design, $h_k(n)$ is written over $h_{k-1}(n)$ after $h_{k-1}(n)$ has been retrieved and used to compute $h_k(n+1)$. In another design, the computation proceeds from $n = 0$ to 255, and $h_k(n)$ is written over $h_{k-1(n-1)}$ n memory. The computation may alternate, e.g., from $n = 0$ to 255 for odd $k$ and from $n = 255$ down to 0 for even $k$, so that $h_k(n)$ may be stored in alternating memory locations in odd and even iterations. In any case, the computation for equation (2) or (4) may be performed for K iterations, or $k = 1, ..., K$, where K may be any suitably selected value. The PDF $h_K(n)$ generated by the last iteration may be provided as a final diffused PDF $h_{dif}(n)$, or $h_{dif}(n) = h_K(n)$.

In equation (4), the diffusion for a given intensity value $n$ is achieved by filtering histogram value $h_{k-1}(n)$ for that intensity value $n$ as well as histogram values $h_{k-1}(n-1)$ and $h_{k-1}(n+1)$ for two nearest intensity values $n-1$ and $n + 1$. The filtering has an effect of flattening the shape of the histogram. In the limit, as $k$ approaches a large value or infinity, the diffused PDF may approach a totally flat histogram, which is a histogram with a constant value for all values of $n$, or $h_{flat}(n) = 1$ for $n = 0, ..., $ N .

The diffusion control function $d(n)$ controls the shifting of the shape of the histogram. In equation (4), if $d(n)$ is larger than one, then $h_{k-1}(n-1)$ is given more weight and $h_{k-1}(n+1)$ is given less weight than $h_{k-1}(n)$, which results in a shift toward larger $n$. Conversely, if $d(n)$ is smaller than one, then $h_{k-1}(n-1)$ is given less weight and $h_{k-1}(n+1)$ is given more weight than $h_{k-1}(n)$, which results in a shift toward smaller n. If $d(n)$ is equal to one, then $h_{k-1}(n-1)$, $h_{k-1}(n)$ and $h_{k-1}(n+1)$ are given equal weight, which results in no shift. The direction of the shift as well as the rate of the shift of the shape of the histogram may thus be controlled by the diffusion control function. To avoid a division by $d(n)$ in equation (4), the reciprocal of $d(n)$, or $1/d(n)$, may be pre-computed for each value of $n$ and stored. Thereafter, $h_k(n)$ may be computed by multiplying $h_{k-1}(n-1)$ with $d(n)$ and multiplying $h_{k-1}(n+1)$ with $1/d(n)$.

After all K iterations are completed, PDF $h_K(n)$ from the last iteration is provided as the diffused PDF $h_{dif}(n)$. A CDF $H_{dif}(n)$ may then be obtained for the diffused PDF $h_{dif}(n)$, as follows:

$$H_{dif}(n) = \sum_{i=0}^{n} h_{dif}(i) \quad . \qquad \text{Eq (5)}$$

A transformation function $F_1(n)$ may be defined as follows:

$$F_1(n) = H_{dif}^{-1}(H_{in}(n)) \, , \qquad \text{Eq (6)}$$

where $H_{in}(n)$ is the CDF of the input image, and

$H_{dif}^{-1}(n)$ is an inverse function of $H_{dif}(n)$.

The inverse function may be obtained in various manners. In one design, $H_{dif}(n)$ is approximated with a polynomial, which may then be invented in a manner know in the art. In another design, a look-up table uses $H_{dif}(n)$ as an index and stores the intensity value $n$ corresponding to $H_{dif}(n)$. In this design, interpolation may be performed to obtain all possible integer values of $H_{dif}(n)$ from 0 to N. A rounded value of $n$ may then be stored for each possible integer value of $H_{dif}(n)$. The inverse function may also be obtained in other manners.

Transformation function $F_1(n)$ may be determined for each value of $n$ as follow. First, $H_{in}(n)$ is obtained for $n$.

The inverse function of $H_{dif}(n)$ for this value of $H_{in}(n)$ is then provided as $F_1(n)$. Transformation function $F_1(n)$ may be used to map the intensity value of each pixel in the input image to another intensity value for that pixel in an output image. The mapping with $F_1(n)$ would result in the mapped intensity values in the output image achieving a PDF of $h_{dif}(n)$.

A transformation function $F_2(n)$ may be defined as follows:

$$F_2(n) = \frac{H_{in}(n)}{2} + \frac{H_{flat}(n)}{2} \ , \qquad\qquad \text{Eq (7)}$$

where $H_{flat}(n) = n$ is a CDF for the totally flat PDF $h_{flat}(n) = 1$.

Transformation function $F_2(n)$ is obtained based on $H_{in}(n)$ and is further capped to limit the amount of deviation from the totally flat PDF. If $F_2(n) = H_{in}(n)$, then mapping with $F_2(n)$ would result in the mapped intensity values achieving a PDF of $h_{in}(n)$. If $F_2(n) = H_{flat}(n)$, then mapping with $F_2(n)$ would result in the mapped intensity values achieving the totally flat PDF. For $F_2(n)$ defined as shown in equation (7), mapping with $F_2(n)$ would result in the mapped intensity values achieving a PDF that is between $h_{in}(n)$ and $h_{flat}(n)$. In equation (7), $F_2(n)$ is equal to $H_{in}(n)$ when $H_{in}(n) = n$, is pulled up toward flat distribution when $H_{in}(n) < n$, and is pulled down toward flat distribution when $H_{in}(n) > n$.

A transformation function $F_3(n)$ may be defined as follows:

$$F_3(n) = (1 - \alpha) \cdot F_1(n) + \alpha \cdot F_2(n) \ , \qquad\qquad \text{Eq (8)}$$

where $\alpha$ is a weighting factor.

Transformation function $F_3(n)$ is a weighted average of transformation functions $F_1(n)$ and $F_2(n)$. Factor $\alpha$ determines the weights given to $F_1(n)$ and $F_2(n)$. If $\alpha = 0$, then $F_3(n)$ is equal to $F_1(n)$, only the diffused CDF $H_{dif}(n)$ is used, and mapping with $F_3(n)$ would result in the mapped intensity values achieving a PDF of $h_{dif}(n)$. If $\alpha = 1$, then $F_3(n)$ is equal to $F_2(n)$, only the original CDF $H_{in}(n)$ with capping is used, and mapping with $F_3(n)$ would result in the mapped intensity values achieving a PDF between $h_{in}(n)$ and $h_{flat}(n)$ An $\alpha$ value closer to 0 may produce more details in the output image whereas an $\alpha$ value closer to 1 may produce more contrast in the output image. $\alpha$ may be set to 0.5 to give equal weight to $F_1(n)$ and $F_2(n)$ or may be set to some other value.

A transformation function $F_4(n)$ may be defined as follows:

$$F_4(n) = \begin{cases} 0.7n & \text{if } F_3(n) < 0.7n \\ 2n & \text{if } F_3(n) > 2n \\ F_3(n) & \text{otherwise .} \end{cases} \qquad\qquad \text{Eq (9)}$$

Equation (9) sets $F_4(n)$ equal to $F_3(n)$ but limits $F_4(n)$ to a range of $0.7n$ to $2n$. This limits the amount of change to the histogram for the output image.

The intensity values of pixels in the original image may be mapped to new intensity values in the output image, as follows:

$$P_{out}(x, y) = F(P_{in}(x, y)) \ , \qquad\qquad \text{Eq (10)}$$

where F(n) may be equal to $F_1(n)$, $F_2(n)$, $F_3(n)$, $F_4(n)$ or some other transformation function. The mapping for each pixel may be achieved by (a) determining the intensity value of that pixel in the input image, or $n_p = P_{in}(x, y)$, (b) determining the transformation function value $F(n_p)$ corresponding to this pixel intensity value $n_p$, and (c) providing the transformation function value as the intensity value for the corresponding pixel in the output image, or $P_{out}(x, y) = F(n_p)$.

The diffusion control function $d(n)$ may be defined in various manner. In one design, the diffusion control function is defined to push lobes at low intensity toward the middle of the intensity range and to push lobes at high intensity toward the middle. The rate of push for each end may be dependent on the percentage of pixels with intensity values in that end.

In one design, outages are computed for low and high ends, as follows:

$$s_{low} = \sum_{i=0}^{N_{low}} h_{in}(i) \qquad \text{and} \qquad s_{high} = \sum_{i=N_{high}}^{N} h_{in}(i) \ , \qquad \text{Eq (11)}$$

where $s_{low}$ is the percentage of pixels with intensity values less than or equal to $N_{low}$, and $s_{high}$ is the percentage of pixels with intensity values greater than or equal to $N_{high}$.

$N_{low}$ determines the range of intensity values within which a lobe will be pushed higher. Conversely, $N_{high}$ determines the range of intensity values within which a lobe will be pushed lower. $N_{low}$ and $N_{high}$ may be any suitably selected values. For example, $N_{low}$ may be equal to 39 and $N_{high}$, may be equal to 216, which would then result in a lobe within the 40 lowest intensity values being pushed higher and a lobe within the 40 highest intensity values being pushed lower. Other values may also be used for $N_{low}$ and $N_{high}$.

A function $d_1(n)$ may be defined as follows:

$$d_1(n) = \begin{cases} (N_{low} - n)/N_{low} & \text{for } n = 0, ..., N_{low} \\ 0 & \text{for } n = N_{low} + 1, ..., N_{high} - 1 \\ (n - N_{high})/N_{high} & \text{for } n = N_{high}, ..., N \ . \end{cases} \qquad \text{Eq (12)}$$

Equation (12) results in $d_1(n)$ having a value of one for $n = 0$, then linearly decreasing to zero at $n = N_{low}$, then remaining at zero until $n = N_{high}$, and then linearly increasing to one at $n = N$.

A function $d_2(n)$ may be defined as follows:

$$d_2(n) = d_1(n) \ . \qquad \text{Eq (13)}$$

If $s_{low} < S$ , then $d_2(n) = d, (n) \cdot (s_{low}/S)^2$, for $n = 0, ..., N_{low}$.
If $s_{high} < S$ , then $d_2(n) = d, (n) \cdot (s_{high}/S)^2$, for $n = N_{high}, ..., N$ .

In equation set (13), $d_2(n)$ is initially set to $d_1(n)$, is then boosted by $(s_{low}/S)^2$ in the low end if $s_{low}$ is less than a threshold $S$, and is boosted by $(s_{high}/S)^2$ in the high end if $S_{high}$, is less than S. S determines whether or not to boost as well as the amount of boost. S may be set to a suitable value, e.g., S = 0.2 · N or some other value.

The diffusion control function $d(n)$ may then be defined as follows:

$$d(n) = d_2(n) + 1 \ , \qquad \text{for } n = 0, ..., N_{haft} - 1 \ , \text{ and} \qquad \text{Eq (14)}$$

$$d(n) = \frac{1}{d_2(n) + 1} \qquad \text{for } n = N_{haft}, ..., N \ ,$$

where $N_{haft} = (N + 1) / 2$ is a middle intensity value in the intensity range from 0 to N.

In equation set (14), a value of one is initially added to $d_2(n)$ to obtain a nominal value of one for $d(n)$. The values of $d_2(n)+1$ in the upper half of the intensity range are then inverted. $d(n)$ is greater than or equal to one for $n$ in the lower half of the intensity range. This results in $h_{k-1}(n-1)$ being multiplied with a value of one or greater, $h_{k-1}(n+1)$ being multiplied with a value of one or smaller, and a lobe within the range of 0 to $N_{low}$ being shifted higher. Conversely, $d(n)$ is less than or equal to one for $n$ in the upper half of the intensity range. This results in $h_{k-1}(n-1)$ being multiplied with a value of one or smaller, $h_{k-1}(n+1)$ being multiplied with a value of one or greater, and a lobe within the range of $N_{high}$ to N being shifted lower.

For clarity, histogram diffusion is described below for an example input image. In this example, diffusion is performed based on the histogram diffusion function shown in equation (4) and with the diffusion control function obtained from equations (11) to (14).

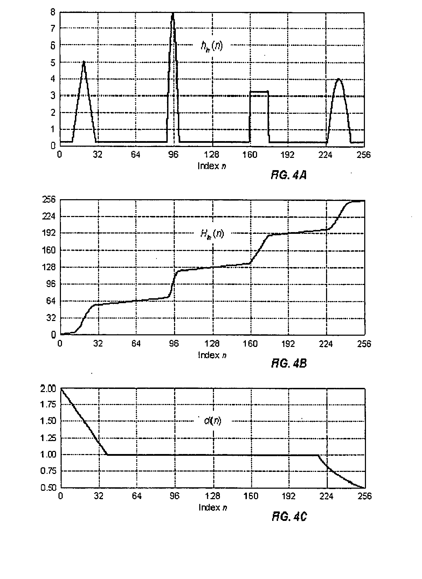

FIG. 4A shows an example original histogram of intensity values corresponding to a PDF of $h_{in}(n)$ for an input image. In this example, 8 bits are used for luminance, and the pixel values are within an intensity range of 0 to 255. In this example, the histogram has four lobes - a triangular lobe at the low end of the intensity range, a narrow lobe centered at $n = 95$, a square lobe centered at $n = 168$, and another lobe at the high end of the intensity range.

FIG. 4B shows a CDF $H_{in}(n)$ for the PDF $h_{in}(n)$ shown in FIG. 4A. $H_{in}(n)$ is a monotonically increasing function with positive slopes located at the positions of the four lobes in $h_{in}(n)$.

FIG. 4C shows the diffusion control function $d(n)$ defined in equations (11) through (14). In this example, $N_{low} = 39$ and $N_{high} = 216$. Diffusion control function $d(n)$ starts at 2, then decreases linearly to 1 at $n = 39$, then remains at 1 until $n = 216$, then decreases to 0.5 at $n = 255$.

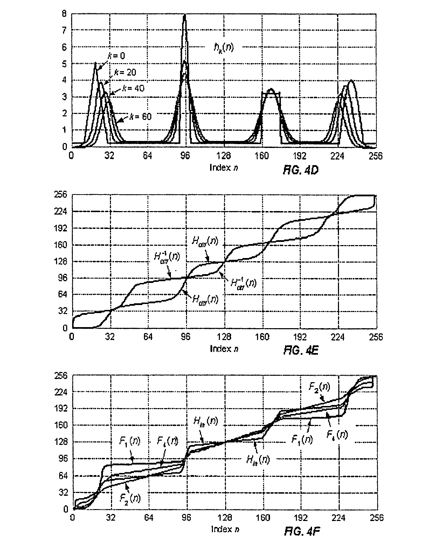

FIG. 4D shows diffused PDFs $h_0(n)$, $h_{20}(n)$, $h_{40}(n)$ and $h_{60}(n)$ after 0, 20, 40 and 60 iterations, respectively. These PDFs are generated with the histogram diffusion function shown in equation (4) and the diffusion control function $d(n)$ shown in FIG. 4C. As shown in FIG. 4D, the lobes are flattened or diffused more with more iterations. The triangular lobe at the low end is shifted higher, and the lobe at the high end is shifted lower. The direction and rate of shift may be controlled by the diffusion control function $d(n)$. In the example shown in FIG. 4D, the lobes at the two ends are attenuated as they are pushed toward the middle. This attenuation may improve the quality of the output image. Nevertheless, the attenuation may be avoided or reduced by defining the diffusion function $g(n+\ell)$ such that the percentages of pixel values at the low and high ends are preserved. The two middle lobes are maintained at the same positions. PDF $h_{60}(n)$ is provided as the final diffused PDF $h_{dif}(n)$.

FIG. 4E shows the CDF $H_{dif}(n)$ for the diffused PDF $h_{dif}(n)$ as well as the inverse of $H_{dif}(n)$, or $H_{dif}^{-1}(n)$..

FIG. 4F shows CDF $H_{in}(n)$ for the input image and transformation functions $F_1(n)$, $F_2(n)$ and $F_4(n)$ with $\alpha = 0.5$. Any one of the transformation functions may be used to map the intensity values of pixels in the input image to new intensity values for corresponding pixels in the output image.

For clarity, a specific histogram diffusion function $h_k(n)$ operating on three histogram values of $h_{k-1}(n-1)$, $h_{k-1}(n)$, and $h_{k-1}(n+1)$ with three coefficients of $d(n)$, 1, and $1/d(n)$ has been described in equation (4). Histogram diffusion may also be performed based on other functions: For example, a histogram diffusion function may operate on more than three histogram values, e.g., two, four, five, or some other number of histogram values. A histogram diffusion function may also use other filter functions instead of the filter function shown in equation (3). In general, a histogram diffusion function may operate on any number of histogram values with any set of coefficients. Different diffusion rate and/or characteristics may be obtained with different numbers of histogram values and/or different sets of coefficients.

For clarity, a specific diffusion control function $d(n)$ has been described above in equations (11) through (14). Other diffusion control functions may also be used to achieve different shift characteristics.

For clarity, specific transformation functions $F_1(n)$ through $F_4(n)$ have been described above. Transformation function $F_1(n)$ in equation (6) is based solely on the diffused histogram $h_{dif}(n)$, transformation function $F_2(n)$ in equation (7) is based on the input histogram $h_{in}(n)$ and the totally flat histogram $h_{flat}(n)$, and transformation function $F_3(n)$ in equation (8) is based on the diffused histogram, the input histogram, and the totally flat histogram. Other transformation functions may also be defined based on the diffused histogram, the input histogram, the totally flat histogram, and/or some other histogram. The various histograms may also be combined in other manners to obtain other transformation functions.

In one design, histogram diffusion may be applied to each input image to be processed. In another design, histogram diffusion may be selectively applied to a given input image, e.g., depending on its histogram. A preliminary test may be performed to determine whether the input image is a candidate for histogram diffusion. For example, $s_{low}$ and/or $s_{high}$ may be computed for the input image and compared against a predetermined threshold. Histogram diffusion may be performed for the input image if $s_{low}$ and/or $s_{high}$ exceeds the threshold.

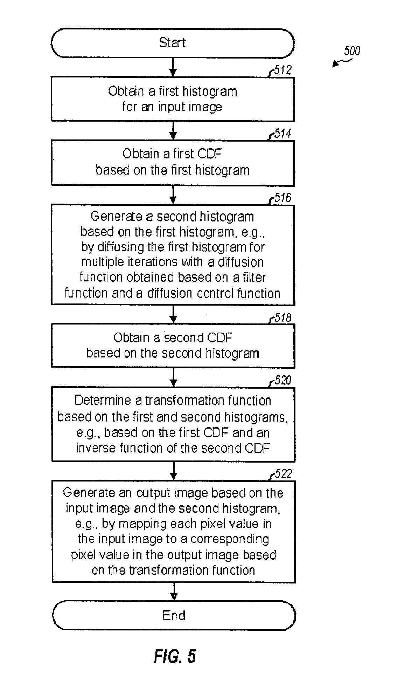

FIG. 5 shows a process 500 for enhancing image quality. Initially, a first/original histogram for an input image may be obtained (block 512). The first histogram may be obtained for intensity values of luminance component, a color component, etc. A first CDF may be obtained based on the first histogram (block 514). A second histogram may be generated based on the first histogram, e.g., by diffusing the first histogram (block 516). The second histogram is not a histogram with a fixed know shape, e.g., is not the totally flat histogram with a flat shape. The diffusion may be achieved by filtering the first histogram for multiple iterations with a diffusion function $g(n,\ell)$, which may be obtained based on a filter function $f(\ell)$ and a diffusion control function $d(n)$. The filter function $f(\ell)$ may control the rate and/or characteristics of the diffusion. The diffusion control function $d(n)$ may control shifts in positions of lobes in the first histogram. The diffusion function $g(n,\ell)$ may have any number of taps and may be dependent on histogram index $n$. A second CDF may be obtained based on the second histogram (block 518).

A transformation function may be determined based on the first and second histograms (block 520). For example, the transformation function may be (a) determined based on the first CDF and an inverse function of the second CDF, e.g., as shown in equation (6), (b) determined based further on a CDF for a totally flat histogram, e.g., as shown in equations (7) and (8), and (c) limited to within a predetermined range, e.g., as shown in equation (9). The transformation function may also be determined in other manners. An output image may be generated based on the input image and the second histogram, e.g., by mapping each pixel value in the input image to a corresponding pixel value in the output image based on the transformation function (block 522).

The image quality enhancement techniques described herein may have certain desirable characteristics such as:

- Easy to control the flattening of the shape of the original histogram by selecting the filter function $f(\ell)$ and the number of iterations, and
- Easy to control shifts in the positions of lobes by selecting the diffusion control function $d(n)$, e.g., no shift in the middle of the intensity range, right shift at the far left/low end, and left shift at the far right/high end.

The techniques described herein may be used to improve intensity coverage and may provide the following advantages:

- Maintain the general shape of the histogram while stretching lobes to improve contrast,
- Provide simple means to control the aggressiveness of the diffusion/adaptation,
- Provide flexible controls to meet user/customer preferences,
- Provide robust performance and can move in the right direction regardless of the shape of the histogram, and
- Has acceptable latency/delay.

The image quality enhancement techniques described herein may be used for communication, computing, networking, personal electronics, etc. For example, the techniques may be used for wireless communication devices, handheld devices, gaming devices, computing devices, consumer electronics devices, computers, etc. An example use of the techniques for a wireless communication device is described below.

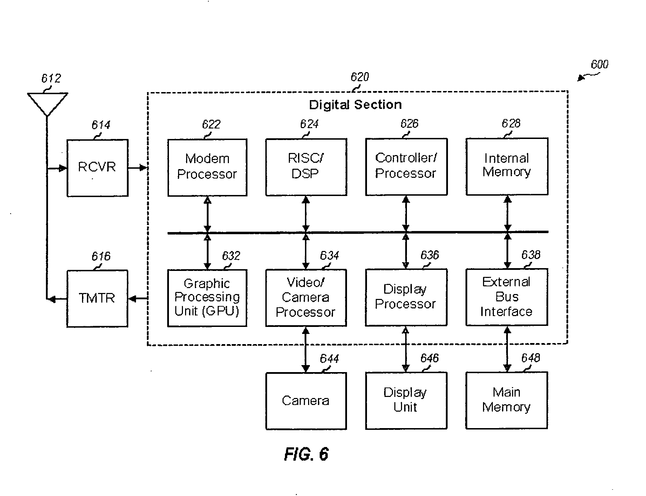

**FIG. 6** shows a block diagram of a design of a wireless communication device 600 in a wireless communication system. Wireless device 600 may be a cellular phone, a terminal, a handset, a personal digital assistant (PDA), a wireless modem, etc. The wireless communication system may be a Code Division Multiple Access (CDMA) system, a Global System for Mobile Communications (GSM) system, etc.

Wireless device 600 is capable of providing bi-directional communication via a receive path and a transmit path. On the receive path, signals transmitted by base stations are received by an antenna 612 and provided to a receiver (RCVR) 614. Receiver 614 conditions and digitizes the received signal and provides samples to a digital section 620 for further processing. On the transmit path, a transmitter (TMTR) 616 receives data to be transmitted from digital section 620, processes and conditions the data, and generates a modulated signal, which is transmitted via antenna 612 to the base stations.

Digital section 620 includes various processing, interface and memory units such as, for example, a modem processor 622, a reduced instruction set computer/digital signal processor (RISC/DSP) 624, a controller/processor 626, an internal memory 628, a graphics processing unit (GPU) 632, a video/camera processor 634, a display processor 636, and an external bus interface (EBI) 638. Modem processor 622 may perform processing for data transmission and reception, e.g., encoding, modulation, demodulation, and decoding. RISC/DSP 624 may perform general and specialized processing for wireless device 600. Controller/processor 626 may direct the operation of various processing and interface units within digital section 620. Internal memory 628 may store data and/or instructions for various units within digital section 620.

GPU 632 may perform graphics processing for 2-dimensional and/or 3-dimensional graphics. Video/camera processor 634 may receive data for images from a camera 644 and may perform processing on data for still images, moving videos, moving texts, etc., for camera and video applications such as camcorder, video playback, video conferencing, etc. Display processor 636 may perform processing to facilitate the display of videos, graphics, images, and texts on a display unit 646. EBI 638 may facilitate transfer of data between digital section 620 and a main memory 648. The image quality enhancement techniques described herein may be implemented by GPU 632 on images for graphics, video/camera processor 634 on input images, display processor 636 for output images, etc.

9

Digital section 620 may be implemented with one or more processors, DSPs, micro-processors, RISCs, etc. Digital section 620 may also be fabricated on one or more application specific integrated circuits (ASICs) and/or some other type of integrated circuits (ICs).

The image quality enhancement techniques described herein may be implemented by various means. For example, these techniques may be implemented in hardware, firmware, software, or a combination thereof. For a hardware implementation, the processing units used to perform the techniques may be implemented within one or more ASICs, DSPs, digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

For a firmware and/or software implementation, the techniques may be implemented with modules (e.g., procedures, functions, and so on) that perform the functions described herein. The firmware and/or software codes may be stored in a memory (e.g., memory 628 or 648 in FIG. 6) and executed by a processor (e.g., processor 624, 626, 632, 634, 636, etc.). The memory may be implemented within the processor or external to the processor.

An apparatus implementing the techniques described herein may be a stand-alone unit or may be part of a device. The device may be (i) a stand-alone integrated circuit (IC), (ii) a set of one or more ICs that may include memory ICs for storing data and/or instructions, (iii) an ASIC such as a mobile station modem (MSM), (iv) a module that may be embedded within other devices, (v) a cellular phone, wireless device, handset, or mobile unit, (vi) etc.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples described herein but is to be accorded the widest scope consistent with the principles and novel features disclosed herein.

**Claims**

1. An apparatus comprising:

   at least one processor configured to obtain a first histogram for an input image, to generate a second histogram based on the first histogram, and to generate an output image based on the input image and the second histogram; and
   a memory coupled to the at least one processor.

2. The apparatus of claim 1, wherein the at least one processor is configured to generate the second histogram by diffusing the first histogram.

3. The apparatus of claim 1, wherein the at least one processor is configured to generate the second histogram by filtering the first histogram based on a filter function.

4. The apparatus of claim 3, wherein the filter function comprises a plurality of taps of equal weight.

5. The apparatus of claim 1, wherein the at least one processor is configured to generate the second histogram by filtering the first histogram based on a diffusion control function that controls shifts in positions of lobes in the first histogram.

6. The apparatus of claim 5, wherein the diffusion control function shifts a lobe at a low end of an intensity range toward center of the intensity range and further shifts a lobe at a high end of the intensity range toward the center.

7. The apparatus of claim 5, wherein the at least one processor is configured to adjust rate of shift of a lobe in an end portion of an intensity range based on percentage of pixels with intensity values in the end portion.

8. The apparatus of claim 5, wherein the diffusion control function maintains positions of lobes in a middle portion of an intensity range.

9. The apparatus of claim 1, wherein the at least one processor is configured to generate the second histogram by filtering the first histogram based on a function having a plurality of taps that are dependent on an index for the first histogram.

**10.** The apparatus of claim 1, wherein the at least one processor is configured to generate the second histogram by filtering the first histogram for multiple iterations.

**11.** The apparatus of claim 1, wherein the at least one processor is configured to determine a transformation function based on the first and second histograms and to generate the output image based on the input image and the transformation function.

**12.** The apparatus of claim 11, wherein the at least one processor is configured to map each pixel value in the input image to a corresponding pixel value in the output image based on the transformation function.

**13.** The apparatus of claim 1, wherein the at least one processor is configured to obtain a first cumulative distribution function (CDF) based on the first histogram, to obtain a second CDF based on the second histogram, to determine a transformation function based on the first and second CDFs, and to generate the output image based on the input image and the transformation function.

**14.** The apparatus of claim 13, wherein the at least one processor is configured to determine the transformation function based on an inverse function of the second CDF.

**15.** The apparatus of claim 13, wherein the at least one processor is configured to determine the transformation function based further on a third CDF for a flat histogram.

**16.** The apparatus of claim 13, wherein the at least one processor is configured to limit the transformation function to within a predetermined range.

**17.** A method comprising:

> obtaining a first histogram for an input image;
> generating a second histogram based on the first histogram; and
> generating an output image based on the input image and the second histogram.

**18.** The method of claim 17, wherein the generating the output image comprises
determining a transformation function based on the first and second histograms, and
generating the output image based on the input image and the transformation function.

**19.** The method of claim 17, wherein the generating the output image comprises
obtaining a first cumulative distribution function (CDF) based on the first histogram,
obtaining a second CDF based on the second histogram,
determining the transformation function based on the first CDF and an inverse function of the second CDF, and
generating the output image based on the input image and the transformation function.

**20.** An apparatus comprising:

> means for obtaining a first histogram for an input image;
> means for generating a second histogram based on the first histogram; and
> means for generating an output image based on the input image and the second histogram.

**21.** The apparatus of claim 20, wherein the means for generating the output image comprises
means for determining a transformation function based on the first and second histograms, and
means for generating the output image based on the input image and the transformation function.

**22.** The apparatus of claim 20, wherein the means for generating the output image comprises
means for obtaining a first cumulative distribution function (CDF) based on the first histogram,
means for obtaining a second CDF based on the second histogram,
means for determining the transformation function based on the first CDF and an inverse function of the second CDF, and
means for generating the output image based on the input image and the transformation function.

**23.** A computer program product, comprising:

computer-readable medium comprising:

code for causing a computer to obtain a first histogram for an input image;
code for causing a computer to generate a second histogram based on the first histogram; and
code for causing a computer to generate an output image based on the input image and the second histogram.

24. The computer program product of claim 23, wherein the computer-readable medium further comprises:

code for causing the computer to determine a transformation function based on the first and second histograms; and
code for causing the computer to generate the output image based on the input image and the transformation function.

25. The computer program product of claim 23, wherein the computer-readable medium further comprises:

code for causing the computer to obtain a first cumulative distribution function (CDF) based on the first histogram;
code for causing the computer to obtain a second CDF based on the second histogram;
code for causing the computer to determine the transformation function based on the first CDF and an inverse function of the second CDF; and
code for causing the computer to generate the output image based on the input image and the transformation function.

FIG. 1

$P_{in}(x,y)$ = intensity of pixel at location (x,y)

Image

100

$h_{in}(n)$

200

Intensity value/histogram index $n$

FIG. 2

FIG. 3A

FIG. 3B

FIG. 4A

FIG. 4B

FIG. 4C

FIG. 4D

FIG. 4E

FIG. 4F

Start

Obtain a first histogram
for an input image
~512

Obtain a first CDF
based on the first histogram
~514

Generate a second histogram
based on the first histogram, e.g.,
by diffusing the first histogram for
multiple iterations with a diffusion
function obtained based on a filter
function and a diffusion control function
~516

Obtain a second CDF
based on the second histogram
~518

Determine a transformation function
based on the first and second histograms,
e.g., based on the first CDF and an
inverse function of the second CDF
~520

Generate an output image based on the
input image and the second histogram,
e.g., by mapping each pixel value in
the input image to a corresponding
pixel value in the output image based
on the transformation function
~522

End

*FIG. 5*

500

FIG. 6